Europäisches Patentamt

(19) European Patent Office

Office européen des brevets

(11) **EP 0 364 754 B1**

(12) **EUROPEAN PATENT SPECIFICATION**

(45) Date of publication and mention
of the grant of the patent:
**26.06.1996 Bulletin 1996/26**

(51) Int. Cl.$^6$: **C01F 7/74**

(21) Application number: **89117393.2**

(22) Date of filing: **20.09.1989**

(54) **Process for the production of aluminium sulphate, starting from the residual slimes of plants for the anodic oxidation of aluminium, and pump to convey said slimes**

Verfahren zur Produktion von Aluminiumsulfat ausgehend von Abfallschlamm von Aluminiumanodisierungsanlagen und Pumpe zur Transportierung dieser Schlämme

Procédé de production de sulfate d'aluminium, à partir des déchets en forme de boues des fabriques pour l'oxydation anodique d'aluminium et une pompe pour transporter ces boues

(84) Designated Contracting States:
**AT BE CH DE ES FR GB GR IT LI LU NL SE**

(30) Priority: **22.09.1988 IT 2204388**

(43) Date of publication of application:
**25.04.1990 Bulletin 1990/17**

(73) Proprietor: **METAL FINISH S.P.A.**
**I-24068 Seriate (Bergamo) (IT)**

(72) Inventor: **Ghislandi, Ernesto**
**I-24100 Bergamo (IT)**

(74) Representative: **Faggioni, Marco, Dr. Ing. et al**
**c/o Fumero Studio Consulenza Brevetti**
**Franz-Joseph-Strasse 38**
**D-80801 München (DE)**

(56) References cited:
CH-A- 609 948          US-A- 2 170 080
US-A- 2 516 388          US-A- 3 667 905
US-A- 4 236 881

• **Patent Abstracts of Japan, vol. 5, no. 31 (C-45)(703), February 25, 1981 & JP-A-55 158 122 ( ORGANO K.K.) 09-12-1980**
• **S. WERNINCK et al.: "Surface treatment and finishing of aluminium and its alloys", vol. 2, ed. 5, 1987, pages 1180 - 1186, chapter 19, Finishing Publ., Teddington, GB**

Printed by Rank Xerox (UK) Business Services
2.12.3/3.4

## Description

The present invention relates to a process for the production of aluminium sulphate, and in particular, to a process which uses as starting material the residual slimes of plants for the anodic oxidation of aluminium.

The aforementioned slimes form at present a waste by-product which is produced in great quantities by plants for the anodic oxidation of aluminium, as a result of the waste water purification treatments carried out in said plants. Said slimes mainly consist of aluminium hydroxide and, due to the remarkable hydration power of this salt, they can only be dehydrated to a very reduced extent. The water content therein (both as hydration water and as dilution water), at the state of maximum dehydration allowed by the known filtering processes, is in fact very high, for instance between 60 and 80% by weight, also depending on the more or less prolonged drying process subsequently undergone by said slimes.

Up to date, the elimination of the above aluminium hydroxide slimes has been carried out considering said slimes merely as a waste product, with no possibility of a partial recovery of the yet relevant amount of aluminium contained therein. The physical shape in which said slimes come out from the anodic oxidation plants - both as coarse panel residues from filter-presses, or as pastes from band-presses, or even as outcomes from centrifugal devices - is in fact totally unsuited to allow carrying out on the same, on an industrial scale, any type of chemical reaction of conversion on the aluminium hydroxide.

The processes of known technique concerning the production of aluminium sulphate - as, for example, that described in US-A-3,667,905 - propose in fact to use, as starting materials, essentially alumina or other solid aluminium compounds, which can easily be powdered and mixed with sulphuric acid in order to obtain a liquid starting solution, easy to convey through the plant. Although such processes could thus in theory also be applied to aluminium hydroxide slimes deriving from anodic oxidation processes, in practice they have not found, nor could they find any real application to such materials apt to prove economically satisfactory. In fact, conveying the slimes through the plant in semisolid form, and subsequently converting their physical structure into one more suited to the requirements of the chemical reaction of conversion by means of sulphuric acid, involve problems and costs which are so considerable as to make any attempt to recover the aluminium contained in said slimes economically unacceptable. The low worth of the aluminium sulphate produced would in fact not allow to make the slime conversion process competitive, as compared to the controlled landfill of said slimes which, as well as involving considerable costs, also creates however the known and serious problems of pollution.

The object of the present invention is therefore to provide a process for the recovery of the aluminium hydroxide contained in the slimes of plants for the anodic oxidation of aluminium, by converting the same into aluminium sulphate - a product highly requested on the market - and to thereby definitively avoid dumping the slimes into the soil, with the great ecological problems connected therewith.

Another object of the present invention is to provide a process of the aforementioned type, apt to be carried out into an extremely simple and reliable plant, both in order to allow an economically productive running of the plant itself - in spite of the modest worth of the aluminium sulphate produced - and in order to guarantee a continuous and efficient working thereof, in spite of the heavy problems of corrosion and of fouling connected with the handling of aluminium hydroxide slimes.

A further object of the present invention is to supply a device for pumping thick slimes containing solid parts, which has a high pumping efficiency and which does not suffer from the mechanical inconveniences to which the known pumping devices are normally subject, that is, in particular, the clogging up for the presence of solid parts, or the continuous and undesirable backflows of slime into the suction pipe due to a faulty working of the valves. A known pump for concrete, which however is not suitable to pump thick slimes containing solid parts, is for example the one described in US-A-2.170.080.

According to the present invention, said objects are reached by means of a process for the production of aluminium sulphate, starting from the residual slimes of plants for the anodic oxidation of aluminium, of the type in which the aluminium hydroxide is reacted with a stoichiometric quantity of sulphuric acid, according to the reaction

$$2Al(OH)_3 + 3H_2SO_4 \ ----- \ Al_2(SO_4)_3 + 6H_2O$$

at a temperature in the range between 90° and 160°C and the aluminium sulphate solution thus obtained is filtered in a hot filter in order to eliminate the insoluble residues and impurities, characterized in that it comprises,

- before starting the above said reaction, the steps of:

    a) thoroughly mixing the slimes by crushing their solid parts, if necessary adding water to obtain a fully homogeneous thick paste, with an overall water content between 70% and 90% on the total weight of the mixture;
    b) feeding the paste thus obtained, by means of a pumping device, into a reactor equipped with a stirrer, keeping the thick paste under stirring; and

- after having completed the above said reaction, the step of:

    c) immediately filter the reaction products, in order to use only the reaction heat to maintain the filter device at the desidered high temperature, not lower of 40°C.

According to another characteristic of the invention, before being sent to the aforedescribed pump, the slimes are mixed with water and homogenized into a mixer formed of a plurality of parallel and partially interpenetrating right-hand and, alternatively, left-hand screws, caused to rotate in alternatively opposite directions by motor means.

According to an important characteristic of the invention, the slimes are conveyed inside the plant by means of a piston pump, the suction and delivery valves of which are mechanically controlled so as to close and open in synchronism with the piston movement, by the same gearmotor unit which operates the piston.

According to a further characteristic of the invention, the reaction products consisting of an aluminium sulphate solution are freed from impurities and other solid residues on rotary drum vacuum filters of the DORR-OLIVER® type.

The present invention also refers to a piston pump for conveying thick fouling pastes containing solid parts, comprising a piston oscillated by a gearmotor unit and particularly suited for use in a process for the production of aluminium sulphate starting from the residual slimes of plants for the anodic oxidation of the aluminium, characterized in that the closing and opening of the suction and delivery valves are mechanically controlled by means of control rods operated in synchronism with the piston movement, to open and close the suction and delivery valves at substantially top dead center and at substantially bottom dead center of the piston stroke, by the same gearmotor unit which operates the piston.

The present invention will now be described in further detail, with reference to the accompanying drawings, which illustrate a preferred embodiment thereof and in which:

Fig. 1 is a flow diagram of the process according to the present invention;
Fig. 2 is an elevation view of the screw mixer for crushing and homogenizing the slimes;
Fig. 3 is a plan view of the same mixer;
Fig. 4 is an elevation view of the piston pump for conveying the slimes and of the respective motor unit;
Fig. 5 is a plan view of the same pump; and
Fig. 6 is a diagrammatic perspective view of the kinematic mechanism controlling the pump valves.

The present invention has been conceived after thorough studies carried out by the Applicant on the possibilities to recover the slimes obtained as waste by-products in the anodic oxidation of aluminium. The great development which said industry has had in most recent years, combined with an increasingly widespread conscience of the damages caused to the environment by the landfill - even though controlled - of said slimes, has made more and more pressing the problem of finding a more valid solution, from every point of view, for the elimination of such slimes which are rich in a highly valuable element as aluminium.

The Applicant thus carried out more intense studies in order to be able to put into practise, on an industrial level, the conversion of aluminium hydroxide into the respective sulphate, according to the known reaction:

$$2Al(OH)_3 + 3H_2SO_4 ----- Al_2(SO_4)_3 + 6H_2O$$

Said reaction has in fact the advantage of being chemically very simple, of having an equilibrium - in suitable physical conditions - totally displaced towards the formation of sulphate and, finally, of giving rise to an aluminium salt requested on the market, even if of modest worth. In fact, aluminium sulphate is a product demanded for its flocculating properties both in the paper industry and in the different depollution technologies.

Up to date, it has not been possible to carry out said reaction directly on the slimes from the waste water purification treatments of plants for the anodic oxidation of aluminium, because the slimes could only be handled with rudimentary mechanical means (as shovel-loaders, conveyor belts, and the like), whereby the reaction, which could only be carried out discontinuously on a highly unhomogeneous starting material, took place in an incomplete and unsatisfactory manner. Consequently, the desired reaction product did not possess the chemical-physical characteristics required for a marketing thereof, especially as compared to the aluminium sulphate coming from the known processes which use, as starting materials, alumina or other easily pulverizable solid aluminium compounds. The Applicant's efforts have thus been directed towards the study of a particular process for treating the aforementioned slimes - wherein the steps of homogenizing and conveying the slime are particularly important - allowing the above reaction to proceed regularly, with the consequent total consumption of the reagents and the formation of a substantially pure reaction product, the chemical-physical features of which are in line with the standards requested by the market.

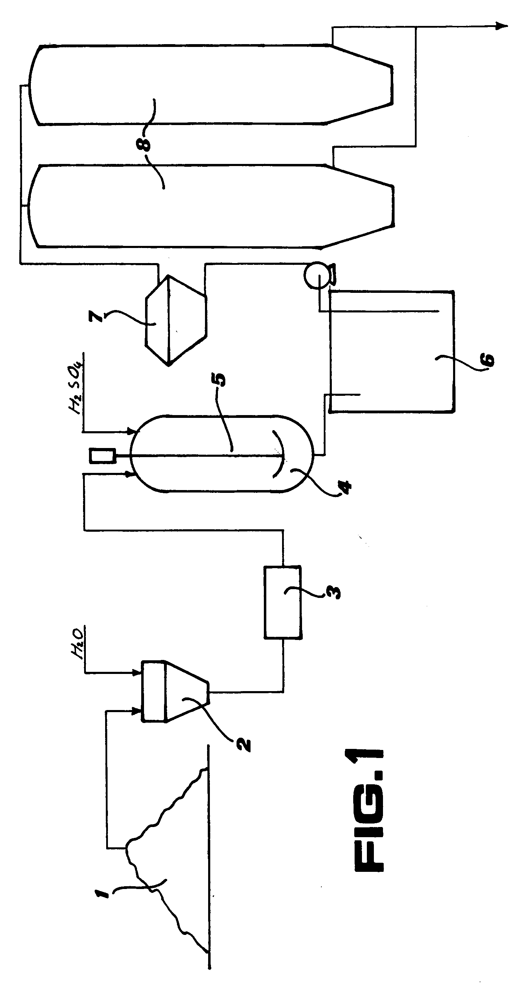

The process of the present invention is illustrated by the flow diagram of fig. 1. The slimes 1 from plants for the anodic oxidation of aluminium, heaped up in the open, are first crushed and homogenized in 2, eventually adding water. The paste thus obtained is sent by means of a feeding device 3 into a reactor 4, which is simultaneously fed with a stoichiometric quantity of sulphuric acid. The reaction product is then temporarily collected into a chamber 6 and subsequently sent to the tanks 8 for storing the finished product, after having been filtered in 7 to remove any impurities and insoluble residues.

As previously stated, the step of homogenizing the starting slimes is particularly critical. In fact, both the correct working of the device feeding the reactor, and the actual process of the reaction, depend on a proper homogenizing, whereby said reaction can be more or less complete according to the homogenizing degree reached on the slimes. As pointed out further above, these in fact come out of plants for the anodic oxidation of aluminium in semisolid form, even if with a high water content, due to the strong hydration power of aluminium hydroxide. It is hence not possible to provide for the conveyance thereof, unless using devices for loading solid products, as shovel-loaders, forks, conveyor belts and the like, which are totally unsuited to feed a reactor. Furthermore, in this form, such slimes are by no means suited for being subsequently reacted with sulphuric acid. In fact, apart from the inevitable problems of clogging up of the reactor and of the difficulties in stirring and conveying the reagents, the reaction would proceed in an incomplete manner, as the single blocks or granules of aluminium hydroxide could unlikely be chemically attacked in a full way.

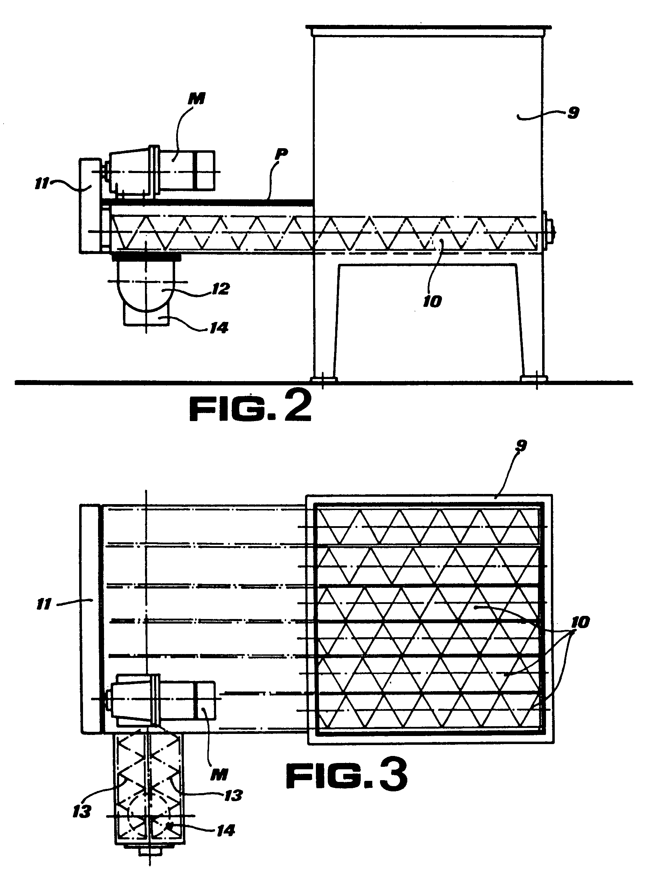

The equipment designed for crushing and homogenizing the slimes has therefore been studied by the Applicant so as to satisfy these specific requirements, taking advantage at the same time of the thixotropic characteristics of aluminium hydroxide. Said equipment, illustrated in figs. 2 and 3, consists of a screw mixer comprising a substantially parallelepiped charging hopper 9, onto the bottom of which and in close proximity thereto there is positioned a plurality of parallel and partially interpenetrating screws 10. In other words, the screws 10 are side by side and the tip of one screw is interposed between two tips of the adjacent screw. The screws 10 emerge with their end part from the hopper 9 for a good portion of their length, and along this area they are covered by a cover P, positioned in close proximity thereto. The motion on the screws is imparted by an electric motor M, by way of a reduction unit 11.

The screws 10 are alternatively right-hand and left-hand screws, consequently the arrangement of the gears of the reduction unit 11 is such as to cause the single screws to rotate in alternatively opposite directions. This arrangement allows to obtain a perfect and continuous mixing of the slimes, conveniently charged with a shovel-loader or by other suitable means into the large mouth of the hopper 9, thereby obtaining a gradual and continuous change of their physical state from the solid or semisolid one - in which they are charged into the mixer - to a perfectly homogeneous pasty one - at the outlet end of the screws 10 - thanks to the continuous forced mixing of said slimes between the screws 10 and, furthermore, between these latter, the cover P and the underlying outward extension of the bottom of the hopper 9.

In correspondence of the outlet end of the screws 10 the homogenized slimes are discharged into a device comprising - in the embodiment shown - a collecting channel 12, positioned transversally to the screws and beneath the same, into which the homogeneous paste of aluminium hydroxide falls down through a suitable slit provided in said outward extension of the bottom of the hopper 9. The channel 12 houses a pair of parallel screws 13, caused to rotate by a self-propelled electric motor (not shown), which convey the paste to the outlet mouth 14 of the mixer. The homogenizing of the aluminium hydroxide is preferably carried out to such an extent that the dimensions of the largest granules, at the end of the mixing operation, do not exceed 3 mm.

The paste thus obtained is sent to the device 3 feeding the reactor 4. Said device is particularly important for the successful result of the process, seen that the slimes - even if converted into a pasty state by the mixer 2 - are still extremely viscous and anyhow recover - owing to their thixotropic characteristic - their semisolid state as soon as they no longer undergo any mechanical stresses. The pumps existing on the market, both of normal type and of special type, can thus by no means be used in the process of the present invention, both because the suction and delivery valves of conventional pumps are rapidly put out-of-work and clogged up, and because the treated slimes are remarkably fouling and corrosive and would thus reduce the useful life of special pumps - which could in theory convey said slimes - to an exceedingly short period of time.

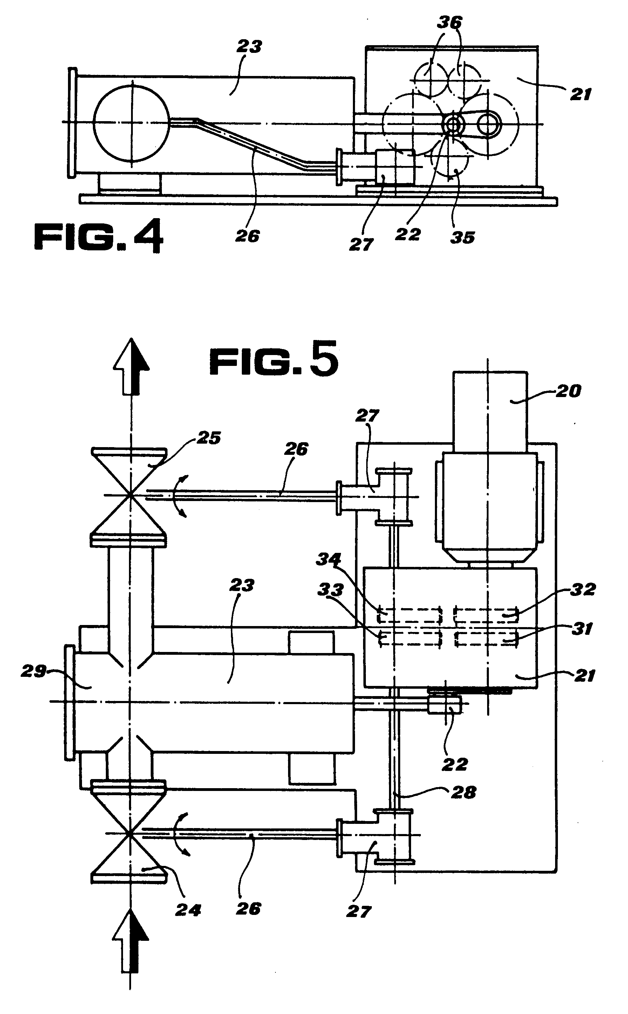

The Applicant has therefore studied a particularly simple and stout feeding device, apt to convey without any particular problems the aluminium hydroxide slimes to be fed into the reactor 4. Said device is illustrated in figs. 4 and 5 and it comprises an electric gearmotor 20 which operates, by way of a connecting rod/crank unit 22, the piston of a reciprocating pump 23. The suction and delivery valves 24 and 25 are ball valves controlled by control rods 26 - possibly articulated, as shown schematically in fig. 4 - connected, by way of bevel gear pairs 27, to a camshaft 28 moved by a kinematic mechanism 21 which is in turn moved by the gearmotor 20. The connection of the camshaft 28 to the kinematic mechanism 21 is obtained by way of a device adopting the Maltese cross principle, so as to cause the opening and closing of the valves 24 and 25 in perfect synchronism with the movement of the piston of the pump 23, namely when this latter finds itself in its top and bottom dead centers. In the embodiment shown in the drawings, the pump 23 is a single-acting pump, but it is evident that, with a fully equivalent construction, a double-acting piston pump could be adopted if this were required in order to increase the capacity of the pump itself.

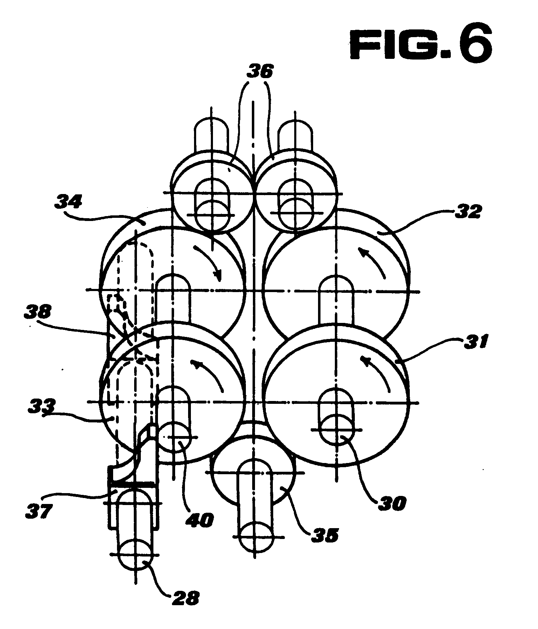

The particular structure of the kinematic mechanism 21 is shown in further detail in fig. 6. Said kinematic mechanism consists of a first pair of gearwheels 31 and 32 keyed onto the outlet shaft 30 of the gearmotor 20 and rotating therewith. A second pair of gearwheels 33 and 34, mounted idle onto an auxiliary shaft 40 parallel to the shaft 30, is positioned to the side of the first pair of gearwheels. The gearwheel 33 is caused to rotate by the gearwheel 31 through a planet gear 35, so as to rotate in the same direction as the gearwheel 31. The gearwheel 34 is instead caused to rotate by the gearwheel 32 through a sequence of two planet gears 36, so as to rotate in a direction opposite to that of the gearwheel 32.

The camshaft 28 is positioned below the second pair of gearwheels 33 and 34 and carries two cams 37 and 38 respectively adjacent to the gearwheels 33 and 34. Two pawls (not shown) are fixed respectively to the lateral surface of said gearwheels, and on the same side of each cam 37 and 38 (outer part in the drawings), which pawls, during rotation of the gearwheels, alternatively act on the cams 37 and 38 causing the camshaft to perform sector rotations alternatively in opposite directions. The positioning of the pawls on the gearwheels 33 and 34 must of course be such as to allow them to come alternatively in contact with the respective cam at each half turn of the shaft 30 and, precisely, when the piston of the pump 23 finds itself in correspondence of its top and bottom dead centres.

The aforedescribed rotation of the camshaft 28 is suitably geared up in the bevel gear pairs 27, so as to impart on the control rods 26 the rotation required to close and open the valves 24 and 25 (normally about 90°), in perfect synchronism with the piston movement.

The structure of the cylinder of the pump 23 is such as to comprise a dead space 29 beyond the top dead centre of the piston, the smallest dimension of which is equal to or greater than the diameter of the suction pipes of the pump itself. In this way, any solid parts which may accidentally have entered the pump can come out of the same without causing any damage to the movable parts, or any interruption in the actual working of the pump.

Thanks to the particular construction of the aforedescribed feeding device, the slimes 1 can be continuously fed into the reactor 4, which can thus work either continuously or discontinuously, according to the requirements of the user. In both cases, the pasty slimes 1 fed into the reactor and kept under constant stirring by the stirrer 5, are mixed with sulphuric acid while they are being charged, and the reaction is then continued up to complete consumption of the reagents.

The sulphuric acid is preferably used in concentrated form, so as to contribute with its own dilution heat to the heating of the aluminium hydroxide paste up to the reaction temperature.

During reaction, the viscosity of the slimes decreases as the reaction proceeds, up to obtaining an aqueous aluminium sulphate solution which is discharged by the reactor into the chamber 6. For the reaction to be carried in the best way, the temperature of the reagents should be controlled while the reaction is taking place, removing the reaction heat to an extent such as to keep said temperature between 90°C and 160°C.

The solution obtained from the reactor 4 as reaction product, and discharged into the chamber 6, has to be freed by filtering from any insoluble residues and impurities before being sent to the storage tanks 8 of the finished product, so as to obtain the clear solution requested by the market. The filtering devices 7 can consist of any known-type filter suited for the purpose; preferably, use is made of rotary drum vacuum filters of the DORR-OLIVER® type. For a successful filtering operation and to avoid, in particular, a very fast occlusion of the filters, the Applicant has discovered after numerous attempts that it is indispensable to carry out a hot filtering, i.e. at a temperature at least higher than 40°C and preferably exceeding 60°C. Said result can be advantageously obtained by proceeding to the filtering operation in a prompt manner, namely before the aqueous aluminium sulphate solution collected in the chamber 6 has cooled down below the aforementioned temperature.

As clearly results from the above, the process of the present invention has fully reached its objects. It in fact allows to fully convert the aluminium hydroxide slimes coming from plants for the anodic oxidation of aluminium, without creating any further waste by-products and obtaining a high-quality compound, which is perfectly marketable and competitive as compared to similar products produced starting from aluminium standard raw materials. The aforedescribed process can moreover be carried out in a particularly simple and reliable plant, of very economic construction, so that in spite of the modest worth of aluminium sulphate, the running of the plant is economically advantageous.

Also the aforedescribed and illustrated pumping device fully reaches the intended object. It is of extremely simple and stout construction, it is entirely equipped with mechanical controls, which do not hence feel the effects of the precarious environmental conditions in which said device is used and which allow to obtain a precise and forced control of the opening and closing of the valves, even with particularly thick working fluids or even with thixotropic fluids as that described in the present invention. The absence of any special electric or pneumatic control devices, as well as allowing an easier installation of the device and simplifying its maintenance, also contributes to reduce its cost to fully acceptable levels.

## Claims

1. Process for the production of aluminium sulphate, starting from the residual slimes of plants for the anodic oxidation of aluminium, of the type in which the aluminium hydroxide is reacted with a stoichiometric quantity of sulphuric acid, according to the reaction

$$2Al(OH)_3 + 3H_2SO_4 \text{ ------ } Al_2(SO_4)_3 + 6H_2O$$

at a temperature in the range between 90° and 160°C and the aluminium sulphate solution thus obtained is filtered in a hot filter in order to eliminate the insoluble residues and impurities, characterized in that it comprises,

- before starting the above said reaction, the steps of:

a) thoroughly mixing the slimes by crushing their solid parts, if necessary adding water to obtain a fully homogeneous thick paste, with an overall water content between 70% and 90% on the total weight of the mixture; b) feeding the paste thus obtained, by means of a pumping device, into a reactor equipped with a stirrer, keeping the thick paste under stirring; and

- after having completed the above said reaction, the step of:

c) immediately filter the reaction products, in order to use only the reaction heat to maintain the filter device at the desidered high temperature, not lower of 40°C.

2. Process for the production of aluminium sulphate as in claim 1), wherein step a) is carried out into a mixer (2) formed of a plurality of parallel and partially interpenetrating right-hand and, alternatively, left-hand screws (10), caused to rotate in alternatively opposite directions by motor means (M).

3. Process for the production of aluminium sulphate as in claim 1), wherein the overall water content in said paste, at the end of step a), is between 80% and 90%.

4. Process for the production of aluminium sulphate as in claim 1), wherein the mean diameter of the solid particles contained in said paste, at the end of step a), is of less than 3 mm.

5. Process for the production of aluminium sulphate as in claim 1), wherein step b) is carried out by means of a piston pump (23), the suction and delivery valves (24, 25) of which are mechanically controlled so as to close and open in synchronism with the piston movement, by the same gearmotor unit (20) which operates the piston.

6. Process for the production of aluminium sulphate as in claim 1), wherein the sulphuric acid employed in the reaction step is concentrated sulphuric acid and is fed into the reactor simultaneously with said paste.

7. Process for the production of aluminium sulphate as in claim 1), wherein the filtering step c) is carried out on rotary drum vacuum filters.

8. Process for the production of aluminium sulphate as in claim 1), wherein the filtering step c) is carried out at a temperature not lower than 60°C.

9. Piston pump for conveying thick fouling pastes containing solid parts, comprising a piston oscillated by a gearmotor unit and particularly suited for use in a process for the production of aluminium sulphate starting from the residual slimes of plants for the anodic oxidation of the aluminium, characterized in that the closing and opening of the suction and delivery valves are mechanically controlled by means of control rods operated in synchronism with the piston movement, to open and close the suction and delivery valves at substantially top dead center and at substantially bottom dead center of the piston stroke, by the same gearmotor unit which operates the piston.

10. Piston pump as in claim 9), wherein said valves are rotary ball valves and the closing and opening thereof is controlled by means of control rods rotated by a kinematic mechanism comprising: a first pair of gearwheels (31, 32) keyed onto the outlet shaft (30) of the gearmotor (20); a second pair of gearwheels (33, 34) mounted as freewheels onto an auxiliary shaft (40) parallel to the outlet shaft 30; the first wheel (33) of the second pair being caused to rotate by the first wheel (31) of the first pair by means of a pinion (35), and the second wheel (34) of the second pair being caused to rotate by the second wheel (32) of the first pair by a sequence of two pinions (36), so that the two wheels (33,34) of the second pair rotate in opposite directions; and a camshaft (28) parallel to the previous ones, caused to perform sector rotations, alternatively in opposite directions, by two pawls fixed respectively to the lateral surface of the gearwheels (33,34) of the second pair and each acting on a respective cam (37,38) of said camshaft, this latter being connected to said control rods (26) by means of bevel gear pairs (27).

11. Piston pump as in claim 9), wherein said bevel gear pairs (27) have a gearing-up ratio apt to turn the amplitude of the sector rotation of the camshaft (28) into the required rotation of the rods (26) controlling said valves.

12. Piston pump as in claim 9), wherein the pump cylinder comprises a dead space (29) beyond the top dead center of the piston, the smallest dimension of which is at least equal to the diameter of the suction pipe.

**Patentansprüche**

1. Verfahren zur Herstellung von Aluminiumsulfat, ausgehend von Abfallschlamm von Aluminiumanodisierungsanlagen, des Typs, bei dem das Aluminiumhydroxid mit einer stöchiometrischen Menge Schwefelsäure gemäß der Gleichung

$$2Al(OH)_3 + 3H_2SO_4 ----- Al_2(SO_4)_3 + 6H_2O$$

bei einer Temperatur im Bereich zwischen 90°C und 160°C reagiert und die auf diese Weise erhaltene Aluminiumsulfatlösung in einem heißen Filter gefiltert wird, um die unlöslichen Rückstände und Verunreinigungen zu eliminieren, dadurch gekennzeichnet, daß das Verfahren folgende Schritte umfaßt:

- vor dem Starten der oben angegebenen Reaktion

  a) gründliches Mischen der Schlammstoffe durch Zerkleinern von deren festen Teilen, Zugeben von Wasser, wenn nötig, um eine vollständig homogene, dickflüssige Masse zu erhalten, die einen Gesamtwassergehalt zwischen 70% und 90% bezüglich des Gesamtgewichts der Mischung aufweist;
  b) Zuführen der auf diese Weise erhaltenen Masse mittels einer Pumpvorrichtung in einen mit einem Rührer ausgestatteten Reaktor, wobei die dickflüssige Masse ständig gerührt wird; und

- nachdem die genannte Reaktion abgeschlossen ist

  c) sofortiges Filtern der Reaktionsprodukte, damit ausschließlich die Reaktionswärme genutzt wird, um die Filtereinrichtung auf der gewünschten hohen Temperatur von nicht weniger als 40°C zu halten.

2. Verfahren zur Herstellung von Aluminiumsulfat nach Anspruch 1, dadurch gekennzeichnet, daß Schritt a) in einen Mischer (2) ausgeführt wird, der aus einer Anzahl von parallelen und teilweise ineinandergreifenden, rechtsgängigen und abwechselnd linksgängigen Schrauben (10) besteht, die zur Drehung in abwechselnd entgegengesetzten Richtungen mittels einer Antriebseinrichtung (M) veranlaßt werden.

3. Verfahren zur Herstellung von Aluminiumsulfat nach Anspruch 1, dadurch gekennzeichnet, daß der Gesamtwassergehalt in der Masse am Ende des Schritts a) zwischen 80% und 90% liegt.

4. Verfahren zur Herstellung von Aluminiumsulfat nach Anspruch 1, dadurch gekennzeichnet, daß der mittlere Durchmesser der festen Partikel, die in der Masse enthalten sind, am Ende des Schritts a) weniger als 3 mm beträgt.

5. Verfahren zur Herstellung von Aluminiumsulfat nach Anspruch 1, dadurch gekennzeichnet, daß Schritt b) mittels einer Kolbenpumpe (23) ausgeführt wird, deren Ansaug- und Abgabeventile (24, 25) mittels der gleichen Getriebemotoreinheit (20), die den Kolben antreibt, mechanisch gesteuert werden, so daß sie sich synchron mit der Kolbenbewegung schließen und öffnen.

6. Verfahren zur Herstellung von Aluminiumsulfat nach Anspruch 1, dadurch gekennzeichnet, daß die im Reaktionsschritt verwendete Schwefelsäure konzentrierte Schwefelsäure ist und gleichzeitig mit der genannten Masse in den Reaktor eingespeist wird.

7. Verfahren zur Herstellung von Aluminiumsulfat nach Anspruch 1, dadurch gekennzeichnet, daß der Filterungsschritt c) auf Vakuumtrommeldrehfiltern ausgeführt wird.

8. Verfahren zur Herstellung von Aluminiumsulfat nach Anspruch 1, dadurch gekennzeichnet, daß der Filterungsschritt c) auf einer Temperatur von nicht weniger als 60°C ausgeführt wird.

9. Kolbenpumpe zum Fördern von dickflüssigen Abfallmassen, die feste Teile enthalten, mit einem Kolben, der mittels einer Getriebemotoreinheit hin- und herbewegt wird, besonders geeignet zur Verwendung in einem Verfahren zur Herstellung von Aluminiumsulfat ausgehend von Abfallschlamm von Aluminiumanodisierungsanlagen, dadurch gekennzeichnet, daß das Schließen und Öffnen der Ansaug- und Abgabeventile mittels Steuerstangen mechanisch gesteuert werden, die synchron mit der Kolbenbewegung betätigt wird, um die Aussaug- und Abgabeventile im wesentlichen am oberen und unteren Totpunkt des Kolbenhubs mittels der gleichen Getriebemotoreinheit, die den Kolben antreibt, zu öffnen und zu schließen.

10. Kolbenpumpe nach Anspruch 9, dadurch gekennzeichnet, daß die Ventile Drehkugelventile sind und deren Schließen und Öffnen mittels Steuerstangen gesteuert wird, die durch einen kinematischen Mechanismus gedreht werden, welcher umfaßt: ein erstes Paar Zahnräder (31, 32), die auf die Ausgangswelle (30) des Getriebemotors (20) aufgekeilt sind; ein zweites Paar Zahnräder (33, 34), die als freilaufende Zahnräder auf einer Hilfswelle (40) gehalten sind, die parallel zur Ausgangswelle (30) ist, wobei das erste Zahnrad (33) des zweiten Paars mittels eines Ritzels (35) durch das erste Zahnrad (31) des ersten Paars in Drehung versetzt wird, und das zweite Zahnrad (34) des zweiten Paars durch eine Aufeinanderfolge von zwei Ritzeln (36) durch das zweite Zahnrad (32) des ersten Paars in Drehung versetzt wird, so daß die beiden Zahnräder (33, 34) des zweiten Paars in entgegengesetzten Richtungen drehen; und eine zu den genannten Wellen parallele Nockenwelle (28), die durch zwei Rastklinken, die jeweils an den Seitehflächen der Zahnräder (33, 34) des zweiten Paars befestigt sind und jeweils auf einen jeweiligen Nocken (37, 38) der Nockenwelle wirken, zur Ausführung von sektorweisen Drehungen, abwechselnd in entgegengesetzten Richtungen, veranlaßt wird, wobei die Nockenwelle mittels Kegelradpaaren (27) mit den Steuerstangen (26) verbunden ist.

11. Kolbenpumpe nach Anspruch 9, dadurch gekennzeichnet, daß die Kegelradpaare (27) ein Übersetzungsverhältnis aufweisen, das geeignet ist, die Größe der abschnittsweisen Drehung der Nockenwelle (28) in die benötigte Drehung der Stangen (26), die die Ventile steuern, umzusetzen.

12. Kolbenpumpe nach Anspruch 9, dadurch gekennzeichnet, daß der Pumpenzylinder einen Totraum (29) oberhalb des oberen Totpunkts des Kolbens aufweist, dessen kleinste Abmessung wenigstens gleich dem Durchmesser der Ansaugleitung ist.

**Revendications**

1. Procédé de production de sulfate d'aluminium, à partir de boues résiduelles de fabriques pour l'oxydation anodique d'aluminium, du type où l'hydroxyde d'aluminium est mis à réagir avec une quantité stoechiométrique d'acide sulfurique, selon la réaction

$$2Al(OH)_3 + 3H_2SO_4 ----- Al_2(SO_4)_3 + 6H_2O$$

à une température se situant entre 90°C et 160°C et la solution de sulfate d'aluminium obtenue de cette façon est filtrée dans un filtre chaud afin d'éliminer les résidus et les impuretés insolubles, caractérisé en ce qu'il comporte,

- avant de commencer ladite réaction ci-dessus, les étapes de :

      a) mélange des boues de façon parfaite en broyant leurs parties solides, en ajoutant si c'est nécessaire de l'eau pour obtenir une pâte épaisse entièrement homogène, avec une teneur globale en eau entre 70% et 90% du poids total du mélange ;
      b) chargement de la pâte obtenue de cette façon, au moyen d'un dispositif de pompage, dans un réacteur équipé d'un agitateur, en maintenant la pâte épaisse sous agitation ; et

- après avoir achevé ladite réaction ci-dessus, l'étape de :

      c) filtration des produits de réaction immédiatement, afin de n'utiliser que la chaleur de réaction pour maintenir le dispositif de filtrage à la température élevée désirée, non inférieure à 40°C.

2. Procédé de production de sulfate d'aluminium comme dans la revendication 1, dans lequel l'étape a) est effectuée dans un mélangeur (2) formé d'une pluralité de vis filetées (10) à droite et, tour à tour, à gauche parallèles et s'enchevêtrant partiellement, entraînées à tourner dans des sens alternativement inverses au moyen d'un moteur (M).

3. Procédé de production de sulfate d'aluminium comme dans la revendication 1, dans lequel la teneur globale en eau dans ladite pâte, à la fin de l'étape a), est entre 80% et 90%.

4. Procédé de production de sulfate d'aluminium comme dans la revendication 1, dans lequel le diamètre moyen des particules solides contenues dans ladite pâte, à la fin de l'étape a), est de moins de 3 mm.

5. Procédé de production de sulfate d'aluminium comme dans la revendication 1, dans lequel l'étape b) est effectuée au moyen d'une pompe à piston (23), dont les soupapes d'introduction et les soupapes de décharge (24, 25) sont commandées mécaniquement afin de se fermer et de s'ouvrir en synchronisme avec le mouvement du piston, par la même unité moteur à engrenage (20) qui actionne le piston.

6. Procédé de production de sulfate d'aluminium comme dans la revendication 1, dans lequel l'acide sulfurique employé dans l'étape réactionnelle est de l'acide sulfurique concentré et, est chargé dans le réacteur en même temps que ladite pâte.

7. Procédé de production de sulfate d'aluminium comme dans la revendication 1, dans lequel l'étape de filtration c) est effectuée sur des filtres sous vide à tambour rotatif.

8. Procédé de production de sulfate d'aluminium comme dans la revendication 1, dans lequel l'étape de filtration c) est effectuée à une température non inférieure à 60°C.

9. Pompe à piston pour le transport de pâtes épaisses encrassantes contenant des parties solides, comprenant un piston balancé par une unité moteur à engrenage et particulièrement adaptée à l'utilisation dans un procédé de production de sulfate d'aluminium à partir de boues résiduelles de fabriques pour l'oxydation anodique de l'aluminium, caractérisée en ce que la fermeture et l'ouverture des soupapes d'introduction et de décharge sont commandées mécaniquement au moyen de tiges de commande actionnées en synchronisme avec le mouvement du piston, pour ouvrir et fermer les soupapes d'introduction et de décharge sensiblement au point mort haut et sensiblement au point mort bas du coup de piston, par la même unité moteur à engrenage qui actionne le piston.

10. Pompe à piston comme dans la revendication 9, dans laquelle lesdites soupapes sont des robinets tournants sphériques et leur fermeture et leur ouverture sont commandées au moyen de tiges de commande tournées par un mécanisme cinématique comprenant : une première paire de roues dentées (31, 32) clavetées sur l'arbre de sortie (30) du moteur à engrenage (20) ; une seconde paire de roues dentées (33, 34) montées comme des roues libres sur un arbre auxiliaire (40) parallèle à l'arbre de sortie 30 ; la première roue (33) de la seconde paire étant entraînée à tourner par la première roue (31) de la première paire au moyen d'un pignon (35), et la seconde roue (34) de la seconde paire étant entraînée à tourner par la seconde roue (32) de la première paire par une série de deux pignons (36), afin que les deux roues (33, 34) de la seconde paire tournent en sens inverses ; et un arbre à cames (28) parallèle aux précédents arbres, amené à effectuer des rotations de secteur, alternativement en sens inverses, par deux cliquets fixés respectivement à la surface latérale des roues dentées (33, 34) de la seconde paire et chacun agissant sur une came respective (37, 38) dudit arbre à cames, ce dernier étant connecté auxdites tiges de commande (26) au moyen de paires d'engrenages coniques (27).

11. Pompe à piston comme dans la revendication 9, dans laquelle lesdites paires d'engrenages coniques (27) ont une proportion de multiplication d'engrenage susceptible de tourner l'amplitude de la rotation de secteur de l'arbre à cames (28) dans la rotation requise des tiges (26) commandant lesdites soupapes.

12. Pompe à piston comme dans la revendication 9, dans laquelle le cylindre de la pompe comprend un espace inutilisé (29) au-delà du point mort haut du piston, dont la plus petite dimension est au moins égale au diamètre de la conduite d'aspiration.

**FIG.1**

FIG. 2

FIG. 3

FIG.4

FIG.5

# FIG. 6